# EUROPEAN PATENT APPLICATION

(11) **EP 4 654 284 A1**
(43) Date of publication of application: **26.11.2025**
(21) Application number: 23917766.0
(22) Date of filing: 25.12.2023
(51) Int. Cl.: H01M 4/136, H01M 4/36, H01M 4/58, H01M 4/66, H01M 4/1397

(54) **NEGATIVE ELECTRODE AND METHOD FOR PRODUCING NEGATIVE ELECTRODE**

(30) Priority: 18.01.2023 JP 2023005970
(71) Applicant: SHIN-ETSU CHEMICAL CO., LTD., Tokyo 1000005 (JP)
(72) Inventor: OSAWA, Yusuke, Annaka-shi, Gunma 379-0125 (JP); HIROSE, Takakazu, Annaka-shi, Gunma 379-0125 (JP); TAKAHASHI, Kohta, Annaka-shi, Gunma 379-0125 (JP); MURAYAMA, Masaki, Annaka-shi, Gunma 379-0125 (JP)
(74) Representative: Schicker, Silvia
(86) International application number: PCT/JP2023/046488
(87) International publication number: WO 2024/154556

(57) **Abstract**

The present invention is a negative electrode including a negative electrode current collector having a roughened surface, and a negative electrode active material provided on the negative electrode current collector, in which the negative electrode active material contains negative electrode active material particles including a compound of lithium, silicon, and oxygen, the negative electrode active material particles are represented by SiOₓLi_{y}, a value "x" is 0.8 or more and 1.2 or less, and a value "y" is 0.5 or more and 3.4 or less, the negative electrode active material has a multilayer structure composed of two or more layers, and in Si 2p binding energy obtained by an X-ray photoelectron spectroscopy analysis of an interior of each layer in the negative electrode active material having the multilayer structure, an intensity of a peak A obtained in a vicinity of 98 eV and an intensity of a peak B in a vicinity of 100.5 eV have a relation in which (the intensity of the peak A ) ≥ (the intensity of the peak B). This provides the negative electrode capable of significantly increasing capacity while maintaining battery characteristics and the method for producing a negative electrode that can produce such a negative electrode.

## Description

### TECHNICAL FIELD

The present invention relates to a negative electrode and a method for producing a negative electrode.

### BACKGROUND ART

In recent years, small electronic devices, typically mobile devices, have become widespread and are being strongly required to further reduce their size and weight and increase their service life. In order to address such market needs, in particular, development of secondary batteries that are small and lightweight, yet can provide a high energy density, is being progressed. These secondary batteries are contemplated to find application not only in small electronic devices but also in large electronic devices, typically automobiles, as well as power storage systems, as typified by houses.

In particular, lithium-ion secondary batteries hold great promise because they can be made smaller and with increased capacity, and they also have a higher energy density than lead or nickel-cadmium batteries.

The above lithium-ion secondary battery includes positive and negative electrodes, a separator, and an electrolyte liquid. The negative electrode contains a negative electrode active material involved in charge and discharge reactions.

While carbon-based active materials are widely used as the negative electrode active material, recent market needs have called for further improvement in the battery capacity. The use of silicon as a negative electrode active material has been contemplated to improve the battery capacity. This is because silicon has a theoretical capacity (4199 mAh/g) that is more than ten times greater than that of graphite (372 mAh/g) and is thus anticipated to significantly improve the battery capacity. The development of silicon materials for use as negative electrode active materials under contemplation not only includes a simple substance of silicon but also their alloys as well as their compounds, as typified by oxides. The active material shapes under contemplation for carbon-based active materials range from a standard application type to an integrated type, in which the material is directly deposited on a current collector.

The use of silicon as a main material of a negative electrode active material, however, expands or contracts the negative electrode active material during charge and discharge, making the negative electrode active material prone to cracking, particularly near its surface layer. In addition, ionic substances are generated inside the active material, which renders this negative electrode active material cracking-prone. Any cracking of the surface layer of the negative electrode active material will create a new surface, increasing the reaction area of the active material. At this time, a decomposition reaction of an electrolyte liquid occurs on this new surface, and the new surface is coated with a decomposition product of the electrolyte liquid, so that the electrolyte liquid is consumed. This often leads to degradation in cycle characteristics.

Various investigations into lithium-ion secondary battery negative electrode materials and electrode configurations employing a silicon material as a main material have been made in order to improve the initial battery efficiency and cycle characteristics.

Specifically, a vapor deposition method is used to simultaneously deposit silicon and amorphous silicon dioxide in order to provide good cycle characteristics and high safety (see e.g., Patent Document 1). Also, a carbon material (electronic conductor) is disposed on a surface of silicon oxide particles in order to provide a high battery capacity and high safety (see e.g., Patent Document 2). Further, in order to improve cycle characteristics and provide higher input/output characteristics, an active material containing silicon and oxygen is produced, and an active material layer with a higher ratio of oxygen near a current collector is formed (see, e.g., Patent Document 3). Further, in order to improve cycle characteristics, a silicon active material is formed such that it contains oxygen at an average oxygen content of 40 at% or less, with a higher oxygen content near a current collector (see e.g., Patent Document 4).

Further, a nanocomposite containing Si-phase, SiO₂, and MyO metal oxide is used to improve the first cycle charge and discharge efficiency (see e.g., Patent Document 5). Further, SiOₓ (0.8 ≤ x ≤ 1.5; the range of particle size: 1 µm to 50 µm) and a carbon material are mixed and fired at a high temperature to improve cycle characteristics (see e.g., Patent Document 6). Further, in order to improve cycle characteristics, an active material is controlled to have an oxygen-to-silicon molar ratio in the negative electrode active material within the range of 0.1 to 1.2 such that a difference between the maximum and minimum molar ratios near the interface between the active material and a current collector is 0.4 or less (see e.g., Patent Document 7). Further, lithium-containing metal oxide is used to improve battery load characteristics (see e.g., Patent Document 8). Further, a hydrophobic layer, such as one made of a silane compound, is formed on the surface of a silicon material to improve cycle characteristics (see e.g., Patent Document 9). Further, silicon oxide is used, and a graphite coating is formed on its surface layer to provide electric conductivity for improved cycle characteristics (see e.g., Patent Document 10). In Patent Document 10, a Raman spectrum of the graphite coating exhibits broad peaks at shift values of 1330 cm⁻¹ and 1580 cm⁻¹, and their intensity ratio I₁₃₃₀/I₁₅₈₀ satisfies 1.5 < I₁₃₃₀/I₁₅₈₀ < 3. Further, particles having a silicon microcrystal phase dispersed in silicon dioxide are used to provide a high battery capacity and improved cycle characteristics (see e.g., Patent Document 11). Further, silicon oxide with a controlled silicon-to-oxygen atomic ratio of 1 : y (0 < y < 2) is used to improve overcharge and overdischarge characteristics (see e.g., Patent Document 12).

As a lithium-ion secondary battery using silicon oxide, Hitachi Maxell, Ltd. started to ship a prismatic secondary battery for a smartphone that adopted a nano-silicon composite in June 2010 (for example, see Non Patent Document 1). Silicon oxide proposed by Hohl is a composite material with Si⁰⁺ to Si⁴⁺, which has various oxidation states (see Non Patent Document 2). Kapaklis proposes a disproportionation structure that is to be separated into Si and SiO₂ by applying thermal load to silicon oxide (see Non Patent Document 3). Miyachi et al. pay attention to Si and SiO₂, which contribute to charge and discharge, among the silicon oxides having the disproportionation structure (see Non Patent Document 4), and Yamada et al. propose a formula of a reaction between the silicon oxide and Li as follows (see Non Patent Document 5).

2SiO(Si+SiO₂) + 6.85Li⁺ + 6.85e⁻ → 1.4Li_{3.75}Si + 0.4Li₄SiO₄ + 0.2SiO₂

The above reaction formula indicates that Si and SiO₂, constituting silicon oxide react with Li to be separated into a Li silicide and a Li silicate, and partially unreacted SiO₂.

Here, the generated Li silicate, which is an irreversible component, is considered to be a stable substance not releasing Li after once formed. A capacity per weight calculated from this reaction formula has a value close to an experimental value, and this reaction formula is recognized as a reaction mechanism of silicon oxide. Kim et al. identify the Li silicate, which is the irreversible component generated with charge and discharge of silicon oxide, as Li₄SiO₄ by using ⁷Li-MAS-NMR and ²⁹Si-MAS-NMR (see Non Patent Document 6).

This irreversible capacity is the weakest point of silicon oxide, and improvement is required. Accordingly, Kim et al. produce a negative electrode having remarkably improved first-cycle efficiency as a battery and being practically usable by using a Li pre-doping method to form the Li silicate in advance (see Non Patent Document 7).

There was also proposed a method of treating a powder, not Li-doping the electrode, to achieve the improvement of the irreversible capacity (see Patent Document 13).

### CITATION LIST

### PATENT LITERATURE

Patent Document 1: JP 2001-185127 A
Patent Document 2: JP 2002-042806 A
Patent Document 3: JP 2006-164954 A
Patent Document 4: JP 2006-114454 A
Patent Document 5: JP 2009-070825 A
Patent Document 6: JP 2008-282819 A
Patent Document 7: JP 2008-251369 A
Patent Document 8: JP 2008-177346 A
Patent Document 9: JP 2007-234255 A
Patent Document 10: JP 2009-212074 A
Patent Document 11: JP 2009-205950 A
Patent Document 12: JP H06-325765 A
Patent Document 13: JP 2015-156355 A

### NON PATENT LITERATURE

Non Patent Document 1: Battery Association of Japan, Newsletter "Denchi (battery)", May 1, 2010, p. 10
Non Patent Document 2: A. Hohl, T. Wieder, P. A. van Aken, T. E. Weirich, G. Denninger, M. Vidal, S. Oswald, C. Deneke, J. Mayer, and H. Fuess: J. Non-Cryst. Solids, 320, (2003), 255.
Non Patent Document 3: V. Kapaklis, J. Non-Crystalline Solids, 354 (2008) 612
Non Patent Document 4: Mariko Miyachi, Hironori Yamamoto, and Hidemasa Kawai, J. Electrochem. Soc. 2007 volume 154, issue 4, A376-A380
Non Patent Document 5: M. Yamada, M. Inaba, A. Ueda, K. Matsumoto, T. Iwasaki, T. Ohzuku, J.Electrochem. Soc., 159, A1630 (2012)
Non Patent Document 6: Taeahn Kim, Sangjin Park, and Seung M. Oh, J. Electrochem. Soc. volume 154, (2007), A1112-A1117.
Non Patent Document 7: Hye Jin Kim, Sunghun Choi, Seung Jong Lee, Myung Won Seo, Jae Goo Lee, Erhan Deniz, Yong Ju Lee, Eun Kyung Kim, and Jang Wook Choi,. Nano Lett. 2016, 16, 282-288.
Non Patent Document 8: Noboru Sato (ed.) "The Latest Development Trends on Lithium-ion Batteries for xEV", CMC Publishing, November 27, 2020, pp. 96-111.

### SUMMARY OF INVENTION

### TECHNICAL PROBLEM

As described above, small electronic devices, represented by mobile terminals, have been advancing recently toward high performance and multifunction, and a lithium-ion secondary battery, which is the main electric source thereof, is required to increase battery capacity. As a solution to this problem, a lithium-ion secondary battery, including a negative electrode using silicon material as the main material, is desired. Moreover, such a lithium-ion secondary battery using silicon material is desired to have initial charge and discharge characteristics and cycle characteristics almost equivalent to those of a lithium-ion secondary battery using a carbon-based active material. Under these circumstances, the cycle characteristics and initial charge and discharge characteristics have been improved by using, as a negative electrode active material, silicon oxide modified by inserting Li and releasing a part of Li. In recent years, an irreversible capacity, which is a disadvantage of silicon oxide, has been reduced by pre-incorporating Li in the silicon oxide as the main material and thereby generating Li silicate, and launch of such batteries has in fact already started to be launched commercially. Even if Li-SiO-C (Non-Patent Document 8), in which Li is used for silicon oxide, is used to replace 100% of a carbon-negative electrode material to produce the battery experimentally, this battery has only a capacity increase in an upper 20% range compared to the battery with the carbon negative electrode material. This means that, given improved performance of small electronic devices (5G, etc.) and improved driving range of electric vehicles, further improvement in the battery capacity is required.

The present invention has been made in view of the above-described problem. An object of the present invention is to provide a negative electrode capable of significantly increasing capacity while maintaining battery characteristics, and a method for producing a negative electrode that can produce such a negative electrode.

### SOLUTION TO PROBLEM

To solve the problem above, the present invention provides a negative electrode comprising:
a negative electrode current collector having a roughened surface; and
a negative electrode active material provided on the negative electrode current collector, wherein
the negative electrode active material contains negative electrode active material particles including a compound of lithium, silicon, and oxygen,
the negative electrode active material particles are represented by SiOₓLi_{y},
a value "x" is 0.8 or more and 1.2 or less, and a value "y" is 0.5 or more and 3.4 or less,
the negative electrode active material has a multilayer structure composed of two or more layers, and
in Si 2p binding energy obtained by an X-ray photoelectron spectroscopy (hereinafter, also referred to as XPS) analysis of an interior of each layer in the negative electrode active material having the multilayer structure, an intensity of a peak A obtained in a vicinity of 98 eV and an intensity of a peak B in a vicinity of 100.5 eV have a relation in which (the intensity of the peak A ) ≥ (the intensity of the peak B).

The inventive negative electrode includes the negative electrode active material layer including the negative electrode active material particles having a compound of lithium, silicon, and oxygen, and thus, a battery capacity can be improved. In addition, the inventive negative electrode can make the negative electrode active material layer directly supported on the roughened surface of the current collector without a binder, a conductive assistant agent, and the like, and region in the electrode that is not involved in charge and discharge can be reduced, moreover, excess vacant space can be reduced, and thus, energy density of the electrode can be significantly improved.

In addition, in the inventive negative electrode, the negative electrode active material particles can be represented by SiOₓLi_{y}, and the value "x" is 0.8 or more and 1.2 or less, and the value "y" is 0.5 or more and 3.4 or less, as a result, excellent battery characteristics can be maintained.

The negative electrode active material layer having a multilayer structure composed of two or more layers can realize a smooth insertion of Li while suppressing decomposition of an electrolyte liquid.

In the Si 2p binding energy obtained by the XPS analysis of the interior of the negative electrode active material, the intensity of the peak A obtained in the vicinity of 98 eV and the intensity of the peak B in the vicinity of 100.5 eV have the relation in which (the intensity of the peak A ) ≥ (the intensity of the peak B). This relation enables suppression of degradation of the negative electrode active material particles due to charge and discharge, and excellent cycle characteristics can be exhibited.

Moreover, it is more preferable that an intensity ratio (the intensity of the peak A) / (the intensity of the peak B) of the peak A to the peak B obtained by the X-ray photoelectron spectroscopy (XPS) analysis of the interior of each layer in the negative electrode active material having the multilayer structure is 1.1 or more and 1.6 or less.

With such a negative electrode, the degradation of the negative electrode active material particles due to charge and discharge can be further suppressed.

It is preferable that in Li 1s binding energy obtained by the X-ray photoelectron spectroscopy (XPS) analysis of the interior of each layer in the negative electrode active material having the multilayer structure, a peak is obtained in a vicinity of the Li 1s binding energy of 55 eV. When the negative electrode active material has such a peak, an irreversible capacity component can be preliminarily formed in the negative electrode active material, enabling the exhibition of excellent battery characteristics.

Moreover, it is preferable that in O 1s binding energy obtained by the X-ray photoelectron spectroscopy (XPS) analysis of the interior of each layer in the negative electrode active material having the multilayer structure, a peak is obtained in a vicinity of 530 eV. When the negative electrode active material has such a peak, an irreversible capacity component can be preliminarily formed in the negative electrode active material, enabling the exhibition of excellent battery characteristics.

The negative electrode active material has a coating on an outermost surface made of at least one of lithium carbonate, lithium phosphate, lithium fluoride, aluminum carbonate, aluminum phosphate, and aluminum fluoride. This can suppress a reaction of the negative electrode active material with moisture and oxygen, prevent material degradation, inhibit decomposition of the electrolyte liquid, facilitate lithium insertion, and allow excellent battery characteristics to be maintained.

The negative electrode active material has at least one of Li₄SiO₄, Li₂Si₂O₅, Li₂SiO₃, and Li₆Si₂O₇. As a result, a stable state is achieved during charge and discharge, and thus, the excellent cycle characteristics can be exhibited.

The negative electrode active material has Si¹⁺ to Si³⁺ silicon and lithium composite oxide. This facilitates smooth insertion and desorption of Li during charge and discharge, and thus, the excellent battery characteristics can be exhibited.

The negative electrode active material has more Si⁴⁺ silicon and the lithium composite oxide than Si¹⁺ to Si³⁺ silicon compounds. This facilitates smooth insertion and desorption of Li during charge and discharge, while maintaining stability of the irreversible component, and thus, the excellent battery characteristics can be exhibited.

It is preferable that the negative electrode current collector has a ten-point mean roughness Rz on the surface of 1.5 µm or more and 5.0 µm or less.

With a negative electrode, including such a negative electrode current collector, not only can the negative electrode active material layer be stably supported, but also the density of the negative electrode active material particles in the negative electrode active material layer can be appropriate, resulting in superior battery characteristics that can be exhibited.

It is preferable that when the negative electrode active material particles are defined as primary particles, the negative electrode active material layer forms secondary particles, which are aggregates of the primary particles, and the secondary particles have a form separated from each other in an in-plane direction.

With such a negative electrode, electrode collapse due to charge and discharge can be prevented more effectively, and a stable negative electrode active material layer can be maintained.

The present invention provides a method for producing the inventive negative electrode described above, the method comprising the steps of:
winding the negative electrode current collector on a can roll having a curvature;
growing a film containing silicon and/or silicon monoxide and having a multilayer structure composed of two or more layers on the negative electrode current collector by vapor phase growth, while the negative electrode current collector is running on the can roll;
forming layers having a multilayer structure, in which an upper portion of each layer contains silicon dioxide, by blowing a gas containing oxygen onto the film containing silicon and/or silicon monoxide; and
forming the negative electrode active material layer by inserting and releasing lithium into and from the layers having the multilayer structure.

With the inventive method for producing a negative electrode, the negative electrode capable of significantly increasing the capacity can be produced while maintaining battery characteristics.

Furthermore, it is preferable that in the step of forming the layers having the multilayer structure, the layers having the multilayer structure are formed such that each layer contains the silicon oxide that includes the silicon dioxide, and
the method for producing the negative electrode comprises the steps of:
growing the negative electrode active material layer that contains the silicon oxide on the negative electrode current collector by vapor phase growth; and
immersing the negative electrode active material layer in a solution containing lithium, thereby modifying the silicon oxide by an electrochemical method to a compound having the lithium, the silicon, and the oxygen, and forming the coating.

With this method for producing a negative electrode, it is possible to insert the lithium using the electrochemical method, thus allowing for the more reliable production of the negative electrode with increasing capacity significantly while maintaining battery characteristics.

### ADVANTAGEOUS EFFECTS OF INVENTION

As described above, when used for the negative electrode of the secondary battery, the inventive negative electrode can obtain high first-cycle efficiency, large capacity, and high cycle characteristics.

Moreover, with the inventive method for producing a negative electrode, it is possible to produce a negative electrode that has high capacity and excellent initial charge and discharge characteristics while obtaining excellent cycle characteristics when used for the negative electrode of the secondary battery.

### BRIEF DESCRIPTION OF DRAWINGS

[FIG. 1] is a view illustrating a cross-sectional view of a configuration of an example of a negative electrode according to the present invention.
[FIG. 2] is a view illustrating an exploded view of a configuration example (a laminate film type) of a lithium-ion secondary battery including a negative electrode according to the present invention.
[FIG. 3] is a surface SEM image of an example of a negative electrode according to the present invention.
[FIG. 4] is a part of an XPS spectrum of a negative electrode active material surface layer in Example 3.
[FIG. 5] is another part of an XPS spectrum of a negative electrode active material surface layer in Example 3.
[FIG. 6] is another part of an XPS spectrum of a negative electrode active material surface layer in Example 3.

### DESCRIPTION OF EMBODIMENTS

As described above, as one method to increase a battery capacity of a lithium-ion secondary battery, a use of a negative electrode based on silicon oxide as a main material has been studied as the negative electrode of the lithium-ion secondary battery. The lithium-ion secondary battery using this silicon oxide is desired to have initial charge and discharge characteristics that are close to being equivalent to those of the lithium-ion secondary battery using carbon-based active material. In addition, by using Li-doped SiO, which can improve the initial charge and discharge characteristics, a significant increase in capacity can be expected, but further improvement of capacity is required for an automotive application, and the like.

Thereupon, the present inventors have earnestly studied to obtain the negative electrode that can improve initial charge and discharge characteristics and increase battery capacity while obtaining high cycle characteristics when used as the negative electrode for the secondary battery, thereby completing the present invention.

That is, the present invention is a negative electrode comprising:
a negative electrode current collector having a roughened surface; and
a negative electrode active material provided on the negative electrode current collector, wherein
the negative electrode active material contains negative electrode active material particles including a compound of lithium, silicon, and oxygen,
the negative electrode active material particles are represented by SiOₓLi_{y},
a value "x" is 0.8 or more and 1.2 or less, and a value "y" is 0.5 or more and 3.4 or less,
the negative electrode active material has a multilayer structure composed of two or more layers, and
in Si 2p binding energy obtained by an X-ray photoelectron spectroscopy analysis of an interior of each layer in the negative electrode active material having the multilayer structure, an intensity of a peak A obtained in a vicinity of 98 eV and an intensity of a peak B in a vicinity of 100.5 eV have a relation in which (the intensity of the peak A ) ≥ (the intensity of the peak B).

Moreover, the present invention is a method for producing the inventive negative electrode described above, the method comprising the steps of:
winding the negative electrode current collector on a can roll having a curvature;
growing a film containing silicon and/or silicon monoxide and having a multilayer structure composed of two or more layers on the negative electrode current collector by vapor phase growth, while the negative electrode current collector is running on the can roll;
forming layers having a multilayer structure, in which an upper portion of each layer contains silicon dioxide, by blowing a gas containing oxygen onto the film containing silicon and/or silicon monoxide; and
forming the negative electrode active material layer by inserting and releasing lithium into and from the layers having the multilayer structure.

Furthermore, the present invention is a method for producing the inventive negative electrode, the method comprising the steps of:
growing the negative electrode active material layer that contains the silicon oxide on the negative electrode current collector by vapor phase growth; and
immersing the negative electrode active material layer in a solution containing lithium, thereby modifying the silicon oxide by an electrochemical method to a compound having the lithium, the silicon, and the oxygen, and forming the coating.

Hereinafter, the present invention will be described in detail. However, the present invention is not limited thereto.

### <Negative Electrode>

To begin with, referring to drawings, a configuration of the inventive negative electrode is described.

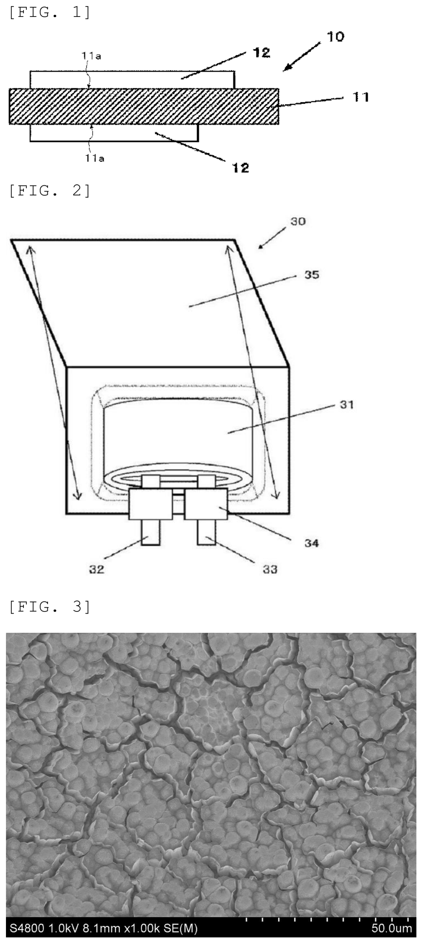

FIG. 1 shows a cross-sectional view of an example of the inventive negative electrode. As shown in FIG. 1, the negative electrode 10 is configured to have a negative electrode current collector 11 and negative electrode active material layers 12 provided on surfaces 11a of this negative electrode current collector 11. This negative electrode active material layer 12 may be provided on both surfaces 11a of the negative electrode current collector 11, as shown in FIG. 1, or only on one side of the surfaces 11a.

The surface 11a of the negative electrode current collector 11 is a roughened surface. That is to say, the negative electrode active material layer 12 is provided on the roughened surface 11a of the negative electrode current collector 11.

Hereinafter, the negative electrode current collector 11 and the negative electrode active material layer 12 are described, respectively.

### [Negative Electrode Current Collector]

The negative electrode current collector 11 is made of a material with excellent conductivity and high mechanical strength. Examples of conductive materials that can be used for the negative electrode current collector 11 include copper (Cu) and nickel (Ni). Such conductive materials are preferably those that do not form an intermetallic compound with lithium (Li).

The negative electrode current collector 11 preferably contains carbon (C) or sulfur (S) in addition to its main element because these elements improve the physical strength of the negative electrode current collector. In particular, when the negative electrode includes an active material layer that expands during charging, the current collector containing the above element has an effect to suppress deformation of the electrode, including the current collector. The content of each of the above elements is preferably, but not limited to, 100 ppm or more by mass. This is because such content ensures a more efficient electrode deformation suppression effect. Such an electrode deformation suppression effect can further improve the cycle characteristics.

In addition, the surface 11a of the negative electrode current collector 11 needs to be roughened, and preferably, a ten-point mean roughness Rz on the surface is 1.5 µm or more and 5.0 µm or less. With such a negative electrode 10, including the negative electrode current collector 11 having the surface 11a with such a desirable mean roughness Rz, not only the negative electrode active material layer 12 can be supported more stably but also the density of the negative electrode active material particles in the negative electrode active material layer 12 can be made properly, and thus, more excellent battery characteristics can be exhibited. The roughened negative electrode current collector 11 includes, for example, a metallic foil subjected to an electrolyzing process, an embossing process, or a chemical etching process.

### [Negative Electrode Active Material Layer]

The negative electrode active material layer 12 of the inventive negative electrode 10 includes the negative electrode active material particles including a compound of lithium, silicon, and oxygen, namely, silicon compound particles containing lithium and oxygen, and the negative electrode active material layer 12 is provided on the negative electrode current collector 11. The negative electrode 10 can be said to have a structure in which the negative electrode active material particles are directly supported on the roughened surface 11a of the negative electrode current collector 11.

The inventive negative electrode 10 can improve battery capacity by containing composite negative electrode active material particles, including silicon compound particles. Moreover, unlike general electrodes, the inventive negative electrode 10 can make the negative electrode active material layer 12 directly supported on the roughened surface 11a of the negative electrode current collector 11 without using a binder, a conductive auxiliary agent and the like, and thus, a region in the electrode that does not involve charge and discharge can be reduced, and an excess vacant space can be reduced. Consequently, the energy density of the electrode can be significantly improved.

In this way, by using the negative electrode 10 having the negative electrode active material layer 12 that is closely supported, it is possible to increase the energy density of the battery, which cannot be achieved with a powder electrode, for example.

In addition, in the formed negative electrode active material layer 12, the negative electrode active material particles having the compound of lithium, silicon, and oxygen can be present adjacent to each other. It is preferable that the negative electrode active material has a coating on an outermost surface made of at least one of lithium carbonate, lithium phosphate, lithium fluoride, aluminum carbonate, aluminum phosphate, and aluminum fluoride. These coatings serve as a protective layer that protects an interface between the negative electrode active material layer and an electrolyte liquid. The inventive negative electrode can exhibit excellent cycle characteristics due to the presence of such coatings.

Furthermore, in the inventive negative electrode 10, the negative electrode active material particles can be represented by SiOₓLi_{y}, in which the value "x" is 0.8 or more and 1.2 or less, and the value "y" is 0.5 or more and 3.4 or less. When "x" is 0.8 or more, the ratio of oxygen in the particles is higher than that of pure silicon, thereby improving the cycle characteristics. When "x" is 1.2 or less, it is preferable because a resistance of the silicon oxide does not become excessively high. Among these, it is preferable for the value "x" of SiOₓLi_{y} to be closer to 1. Because the high cycle characteristics can be obtained. Note that a composition of the silicon compound in the present invention does not necessarily mean 100% purity and may contain a trace amount of impurity elements. When the value "y" is 0.5 or more, an irreversible component of SiO generated during a first cycle charge and discharge can be fixed in advance, and an energy density of electrodes can be significantly improved. When the value "y" is 3.4 or less, the negative electrode active material particles become in a stable state with respect to oxygen and moisture, enabling the assembly of a battery with higher capacity.

In other words, according to the inventive negative electrode 10, it is possible to significantly increase the capacity while maintaining the battery characteristics.

On the other hand, when the value "x" is less than 0.8, although the capacity is increased, an area where Si⁰⁺ reacts with the electrolyte liquid is increased, thereby degrading the cycle characteristics. Moreover, when the value "x" exceeds 1.2, this results in a loading substance, and also degrades the battery characteristics. The value "x" is preferably as close to 1 as possible.

In order to insert Li more smoothly, it is preferable to make the negative electrode active material layer 12 into the multilayer structure composed of two or more layers at the time of forming the negative electrode active material layer 12. The upper limit of the number of layers is not particularly limited, but, for example, can have layers of 30 or fewer.

The negative electrode active material layer having a multilayer structure composed of two or more layers can realize the smooth insertion of Li while suppressing the decomposition of the electrolyte liquid. It is preferable that each layer of the negative electrode active material layer has a layer on its surface composed of the high-valent silicon compound containing at least one or more of lithium and oxygen. By having a layer made of the silicon compound on the surface, it is possible to alleviate expansion and contraction of the negative electrode due to charge and discharge, and maintain a stable negative electrode active material layer.

Moreover, it is preferable that the negative electrode active material layer has Si¹⁺ to Si³⁺ silicon and lithium composite oxide. This is because the Si¹⁺ to Si³⁺ silicon and lithium composite oxide can suppress the generation of the irreversible component during charge and discharge of the negative electrode, and this enables the improvement of the cycle characteristics.

Furthermore, it is preferable that the negative electrode active material has a greater amount of the Si⁴⁺ silicon and lithium composite oxide present than the Si¹⁺ to Si³⁺ silicon compound. This is because the Si⁴⁺ silicon and lithium composite oxide facilitates smoother charge and discharge of the negative electrode; accordingly, a greater amount of the Si⁴⁺ silicon and lithium composite oxide than the Si¹⁺ to Si³⁺ silicon compound enables the improvement of the capacity of the battery.

It is preferable that the negative electrode active material has at least one of Li₄SiO₄, Li₂Si₂O₅, Li₂SiO₃, and Li₆Si₂O₇. In addition to Li₂SiO₃, Li silicates such as Li₄SiO₄ and Li₆Si₂O₇ are relatively more stable than other Li compounds; therefore, silicon-based active materials containing these Li compounds can obtain more stable battery characteristics. These Li compounds can be obtained by selectively converting a part of a SiO₂ component generated in the silicon compound into the Li compound, thereby modifying the silicon compound.

Moreover, silicon monoxide, represented by typical silicon oxide, is often expressed as a composite having Si of 0 to 4 valences. For example, when a Si 2p spectrum of silicon monoxide is obtained by photoelectron spectroscopy, a Si⁰⁺ peak appears in a vicinity of the binding energy of 99 eV, and a Si⁴⁺ peak appears in a vicinity of the binding energy of 103 eV, especially the spectra show that valence 0 state and Si⁴⁺ state attributed to these peaks are dominant. On the other hand, when the negative electrode active material particles containing silicon are directly supported on the negative electrode current collector 11, a structure of a silicon compound can be changed by controlling a state of a roughened portion of the surface 11a of the negative electrode current collector 11, a temperature of the negative electrode current collector 11 (a substrate on which a substance is to be deposited), a running speed of the negative electrode current collector 11, and gas blowout.

The valence state of silicon in the negative electrode active material particles can be judged by subjecting a photoelectron spectrum obtained by the above photoelectron spectroscopy to waveform separation processing and confirming the presence or absence of peaks attributed to each valence state of silicon at the spectrum.

The valence state of silicon in the negative electrode active material particles can be confirmed by using, for example, a scanning X-ray photoelectron spectrometer PHI Quantera II manufactured by ULVAC-PHI, INCORPORATE. In this case, an X-ray beam diameter can be set to a diameter of 100 µm, and a neutralization gun can be used.

It is preferable that, in Si 2p binding energy obtained by the X-ray photoelectron spectroscopy (XPS) analysis of the interior of the negative electrode active material, the intensity of the peak A obtained in the vicinity of 98 eV and the intensity of the peak B in the vicinity of 100.5 eV have the relation in which (the intensity of the peak A ) ≥ (the intensity of the peak B). By having this relation of peak intensities, the generation of the irreversible component of the negative electrode during charge and discharge can be suppressed, and this enables to obtaining of better battery characteristics.

Here, the maximum intensity of the peak A can be obtained in the vicinity of 98 eV, and the maximum intensity of the peak B can be obtained in the vicinity of 100.5 eV. Here, a term "vicinity" can be defined as a range of ± 1 eV. In other words, the vicinity of 98 eV refers to 97 eV to 99 eV, and the vicinity of 100.5 eV refers to 99.5 eV to 101.5 eV.

Moreover, it is more preferable that the intensity ratio (the intensity of the peak A) / (the intensity of the peak B) of the peak A to the peak B obtained by the XPS analysis of the interior of each layer in the negative electrode active material is 1.1 or more and 1.6 or less. When this intensity ratio is 1.1 or more, a stabilization of the irreversible component becomes more sufficient, thereby further improving the battery characteristics. When this intensity ratio is 1.6 or less, disproportionation of the negative electrode active material is less likely to occur during charge and discharge, and the cycle characteristics of the battery are further improved.

It is preferable that in Li 1s binding energy obtained by the XPS analysis of the interior of each layer in the negative electrode active material having the multilayer structure, a peak is obtained in a vicinity of the Li 1s binding energy of 55 eV. By having this peak, it is possible to suppress the generation of the irreversible component in the negative electrode during discharge, and thus, better battery characteristics can be obtained.

Here, the maximum intensity of the peak can be obtained in the vicinity of 55 eV, and the term "vicinity" can be defined as a range of ± 1 eV. In other words, the vicinity of 55 eV refers to 54 eV to 56 eV.

Moreover, it is preferable that in O 1s binding energy obtained by the XPS analysis of the interior of each layer in the negative electrode active material having the multilayer structure, a peak is obtained in a vicinity of 530 eV. By having this peak, it is possible to suppress the generation of the irreversible component in the negative electrode during discharge, and thus, better battery characteristics can be obtained.

Here, the maximum intensity of the peak can be obtained in the vicinity of 530 eV, and the term "vicinity" can be defined as a range of ± 1 eV. In other words, the vicinity of 530 eV refers to 529 eV to 531 eV.

The negative electrode active material particles originate from the roughened portion of the surface 11a of the negative electrode current collector 11, and grow by the vapor phase growth. When these particles are defined as primary particles, it is preferable that secondary particles, which are aggregates of the primary particles, are formed.

This can be controlled by changing the roughened state of the surface 11a of the negative electrode current collector 11; for example, a wider roughened interval results in smaller secondary particle groups, while a narrower roughened interval and the primary particles filled up too densely result in the generation of the secondary particles during charging and discharging less likely to occur.

The secondary particles desirably have a separated form from each other in the in-plane direction. The stable negative electrode active material layer 12 can be maintained by charging and discharging in this state.

### [Method for Producing Negative Electrode]

The inventive method for producing the negative electrode preferably includes the steps of growing the negative electrode active material layer that contains the silicon oxide on the negative electrode current collector by vapor phase growth, and immersing the negative electrode active material layer in the solution containing lithium, thereby modifying the silicon oxide by an electrochemical method to a compound having the lithium, the silicon, and the oxygen, and forming the coating.

The inventive method for producing the negative electrode can produce the inventive negative electrode. However, the method which produces the inventive negative electrode is not limited to the inventive producing method described here.

Hereinafter, an example of the inventive method for producing the negative electrode is specifically described, however, the inventive method for producing the negative electrode is not limited to the example described below.

First, a layer containing the silicon compound containing oxygen (silicon oxide) particles (negative electrode active material layer) is produced. Here, the negative electrode active material layer containing the silicon oxide is grown on the negative electrode current collector by the vapor phase growth.

This silicon oxide can be formed by depositing silicon oxide gas onto the negative electrode current collector having a roughened surface, for example, a roughened foil (for example, roughened copper foil) having a ten-point mean roughness Rz on the surface between 1.5 µm or more and 5.0 µm or less (for example, 2.5 µm). Specific procedures are as follows.

First, a raw material that is to generate silicon oxide gas is heated at a temperature of 1100°C or higher under reduced pressure, and generates silicon oxide gas. In this case, a mixture of metallic silicon powder and silicon dioxide powder can be used as the raw materials. Considering the presence of surface oxygen of the metallic silicon powder and trace oxygen in a reaction furnace, it is preferable that the mixing mole ratio is within a range of 0.9 < metallic silicon powder/silicon dioxide powder < 1.2.

Moreover, although the silicon oxide can be formed by performing vapor deposition using metallic silicon and introducing oxygen gas onto the deposited silicon, in this case, valence control cannot be achieved, and as a result, the silicon becomes a composite that is separated into 0-valent and 4-valent compound states. Similarly, it is possible to introduce a reducing gas (hydrogen) into the silicon dioxide gas, but it is difficult to introduce a sufficient amount of hydrogen to vapor moving at nearly a speed of sound. As a result, in the inventive method for producing a negative electrode, it is preferable to use metallic silicon powder and silicon dioxide powder as the raw material.

The silicon oxide gas generated as described above is deposited on the surface of the roughened portion of the negative electrode current collector and becomes primary particles having a pillar-shaped structure.

At this time, by changing a roughening structure on the surface of the negative electrode current collector, it is also possible to change the structure of the primary particles.

Solidification heat and radiation heat of a heating section during deposition facilitate the crystallization of the negative electrode active material layer. Therefore, it is preferable to perform the vapor phase growth while running the negative electrode current collector and reducing the thermal load, so as to prevent the crystallization of Si.

In particular, silicon oxide can be said to be suitable for the formation of the active material by deposition because, unlike silicon, silicon oxide is sublimable and can be deposited quickly, and there is no concern about radiation heat received from molten silicon, which is a problem with the silicon films.

Deposition can be performed on both roughened surfaces of the negative electrode current collector. For example, deposition can be performed on one roughened surface of the negative electrode current collector, then the negative electrode current collector can be turned over, and deposition can be performed on another roughened surface of the negative electrode current collector.

Next, the Li is inserted into the negative electrode active material layer, containing the silicon oxide, produced as described above. As a result, the negative electrode active material particles containing the silicon oxide particles into which lithium is inserted are produced. That is, in this way, the silicon oxide particles are modified, and the Li compound is generated inside the silicon oxide particles. It is preferable that the insertion of Li is performed by the electrochemical method. When the electrochemical method is employed, this facilitates achieving the Si 2p binding energy obtained by an XPS analysis described above, in which the intensity of the peak A obtained in the vicinity of 98 eV and the intensity of the peak B in the vicinity of 100.5 eV, have the relation in which (the intensity of the peak A ) ≥ (the intensity of the peak B). Note that the condition in which (the intensity of the peak A ) ≥ (the intensity of the peak B) is satisfied can be obtained experimentally. For example, by experimental production using the electrochemical method, the condition in which (the intensity of the peak A ) ≥ (the intensity of the peak B) is satisfied can be found.

### [Modification by Electrochemical Method]

In the modification by the electrochemical method, to begin with, lithium can be inserted by immersing the negative electrode active material layer containing the silicon oxide particles as an anode and lithium metal as a cathode in a liquid non-aqueous electrolyte (electrolyte liquid), and then supplying a current. This electrolyte liquid has an electrolyte salt dissolved in a solvent, and may contain other materials such as additives.

The solvent can be, for example, a non-aqueous solvent. Examples of non-aqueous solvents include ethylene carbonate, propylene carbonate, butylene carbonate, dimethyl carbonate, diethyl carbonate, ethylmethyl carbonate, methylpropyl carbonate, 1,2-dimethoxyethane, and tetrahydrofuran. Among these, at least one or more of ethylene carbonate, propylene carbonate, dimethyl carbonate, diethyl carbonate, or ethylmethyl carbonate is preferably used. This is because such a solvent enables better characteristics. In this case, more advantageous characteristics can be obtained by combining high-viscosity solvents such as ethylene carbonate or propylene carbonate with low-viscosity solvents such as dimethyl carbonate, ethylmethyl carbonate, or diethyl carbonate. This is because the dissociation and ion mobility of electrolyte salts are improved.

In particular, the solvent desirably contains at least one of the halogenated chain carbonate ester or halogenated cyclic carbonate ester. Thereby, a stable coating is formed on the surface of the negative electrode active material at charge and discharge, particularly during charging. In this case, the halogenated chain carbonate ester is a chain carbonate ester having halogen as a constituent element (at least one hydrogen is substituted by halogen). In addition, the halogenated cyclic carbonate ester is cyclic carbonate ester having halogen as a constituent element (that is, at least one hydrogen is substituted by halogen).

The halogen type is preferably, but not limited to, fluorine, for fluorine enables the formation of a better coating than other halogens. A larger number of halogens is better, for the coating obtained is more stable, and a decomposition reaction of an electrolyte liquid is reduced.

Examples of the halogenated chain carbonate ester include fluoromethyl methyl carbonate and difluoromethyl methyl carbonate. Examples of the halogenated cyclic carbonate ester include 4-fluoro-1,3-dioxolane-2-one and 4,5-difluoro-1,3-dioxolane-2-one.

The solvent additive preferably contains a cyclic carbonate ester having an unsaturated carbon bond, which enables the formation of a stable coating on the surface of the negative electrode during charge and discharge, and suppresses a decomposition reaction of the electrolyte liquid. Examples of the unsaturated carbon bond cyclic carbonate ester include vinylene carbonate and vinyl ethylene carbonate.

In addition, the solvent additive preferably contains sultone (cyclic sulfonic acid ester), which enables improvement of a battery's chemical stability. Examples of sultone include propane sultone and propene sultone.

In addition, the solvent preferably includes acid anhydride, for this enables improvement of the electrolyte's chemical stability. Examples of acid anhydride include propane disulfonic acid anhydride.

The electrolyte salt can contain, for example, at least one or more of light metal salts, such as lithium salt. Examples of lithium salts include lithium hexafluorophosphate (LiPF₆) and lithium tetrafluoroborate (LiBF₄).

The content of the electrolyte salt relative to the solvent is preferably 0.5 mol/kg or more and 2.5 mol/kg or less. This is because high ionic conductivity can be obtained.

After insertion of lithium, lithium can be desorbed by supplying the current using the negative electrode active material layer containing the silicon oxide particles as a cathode and lithium metal as an anode. At this time, it is possible to control a state of a filling coating (composite compound) by adjusting a temperature of the solvent, type and concentration of a polyphenylene compound or polycyclic aromatic contained in the solvent, and the concentration of the polycyclic aromatic forming a complex with Li. The obtained silicon active material particles may also be heat-treated in an inert gas atmosphere. The Li compound can be stabilized by the heat treatment.

The composite compound thus produced can also contain a plurality of types of compounds.

In this way, the inventive negative electrode can be produced.

### <Lithium-ion Secondary Battery>

The inventive negative electrode can be used in a negative electrode in a non-aqueous electrolyte secondary battery, e.g., a lithium-ion secondary battery.

Then, as a concrete example of the non-aqueous electrolyte secondary battery, in which the inventive negative electrode can be used, an example of the laminate film type lithium-ion secondary battery is described.

### [Configuration of Laminate Film Type Secondary Battery]

The laminate film type lithium-ion secondary battery 30 shown in FIG. 2 mainly includes a wound electrode body 31 stored inside sheet-shaped exterior member 35. This wound electrode body 31 is formed by winding a positive electrode, the negative electrode, and a separator disposed between these electrodes. There is also a case of storing a laminate having the separator disposed between the positive electrode and the negative electrode without winding. The electrode bodies of both types have a positive electrode lead 32 attached to the positive electrode and a negative electrode lead 33 attached to the negative electrode. The outermost circumference of the electrode body is protected by a protecting tape.

For example, the positive electrode lead 32 and the negative electrode lead 33 are extended outward in one direction from the interior of the exterior member 35. The positive electrode lead 32 is made of, for example, a conductive material such as aluminum, and the negative electrode lead 33 is made of, for example, a conductive material such as nickel or copper.

The exterior member 35 is composed of, for example, laminate films each including a fusion-bond layer, a metal layer, and a surface protection layer laminated in this order. Two laminate films are fused, or bonded with an adhesive or other means, at outer edges of the respective bonding coats such that the fusion-bond layers face the electrode body 31. For example, the fusion-bond layer is a film, such as one made of polyethylene or polypropylene, and the metal layer is aluminum foil. The protection layer is nylon, for example.

Sealing films 34 are inserted in the respective gaps between the exterior member 35 and the positive electrode lead 32 and between the exterior member 35 and the negative electrode lead 33 to prevent entry of outside air. The sealing film is made of, for example, polyethylene, polypropylene, or polyolefin resin.

Hereinafter, each member is described, respectively.

### [Positive Electrode]

The positive electrode has a positive electrode active material layer disposed on both surfaces or one surface of a positive electrode current collector, as in the negative electrode 10 shown in FIG. 1, for example.

The positive electrode current collector is formed by, for example, a conductive material such as aluminum.

The positive electrode active material layer contains one or two or more of positive electrode materials capable of occluding and releasing lithium ions and may contain a positive electrode binder, a positive electrode conductive auxiliary agent, a dispersing agent, or other materials, according to design.

The positive electrode material is preferably a lithium-containing compound. Examples of this lithium-containing compound include a composite oxide composed of lithium and a transition metal element or a phosphate compound containing lithium and a transition metal element. Among these positive electrode materials, a compound containing at least one or more of nickel, iron, manganese, and cobalt is preferable. The chemical formula of this compound is expressed by, for example, LiₓM1O₂ or Li_{y}M2PO₄, where M1 and M2 represent at least one or more of the transition metal elements. In this formula, "x" and "y" represent values that vary depending on the state of charge and discharge of a battery, which typically satisfy 0.05 ≤ x ≤ 1.10 and 0.05 ≤ y ≤ 1.10.

As examples of a composite oxide containing lithium and a transition metal element, such as a lithium cobalt composite oxide (LiₓCoO₂), a lithium nickel composite oxide (LiₓNiO₂), and a lithium nickel cobalt composite oxide can be mentioned. As examples of the lithium nickel cobalt composite oxide, such as lithium nickel cobalt aluminum composite oxide (NCA) and lithium nickel cobalt manganese composite oxide (NCM), can be mentioned.

As examples of phosphate compounds containing lithium and a transition metal element, such as a lithium iron phosphate compound (LiFePO₄) and a lithium iron manganese phosphate compound (LiFe₁₋ᵤMnᵤPO₄ (0 < u < 1)), can be mentioned. By virtue of using these positive electrode materials, high battery capacity as well as excellent cycle characteristics can be obtained.

As the positive electrode binder, for example, any one or more of polymer materials, synthetic rubber, can be used. Polymer materials are, for example, polyvinylidene fluoride, polyimide, polyamideimide, aramid, polyacrylic acid, lithium polyacrylate, sodium polyacrylate, and carboxymethyl cellulose. Synthetic rubbers include styrene-butadiene rubber, fluorinated rubber, and ethylene propylene diene, for example.

As the positive electrode conductive auxiliary agent, for example, any one or more of carbon materials, such as carbon black, acetylene black, graphite, ketjen black, carbon nanotube, and carbon nanofiber, can be used.

### [Negative Electrode]

The inventive negative electrode is used as the secondary battery's negative electrode. The negative electrode, which configures this secondary battery, preferably has a negative electrode charge capacity larger relative to the electrical capacitance (charge capacity as a battery) provided by the positive electrode active material agent. As a result, the precipitation of lithium metal on the negative electrode can be suppressed.

In this example, the positive electrode active material layers are provided partially on both faces of the positive electrode current collector, and, similarly, the negative electrode active material layers of the present invention are also provided partially on both faces of the negative electrode current collector. In this case, for example, the negative electrode active material layers provided on the negative electrode current collector are preferably provided with a region where the opposite positive electrode active material layers are not present. This is to design a stable battery.

The non-facing region described above, at which the positive electrode active material layer and negative electrode active material layer do not face one another, is hardly affected by charge and discharge. The state of the negative electrode active material layers is consequently retained from just after the formation. This enables investigation of the composition of the negative electrode active material with excellent reproducibility and high precision without dependence on the presence or absence of charge and discharge.

### [Separator]

The separator separates the lithium metal or the positive electrode from the negative electrode so as to prevent short circuits due to contact of both electrodes while passing lithium ions through. This separator may be made of, for example, a porous film of synthetic resin or ceramics and may have a laminated structure in which two or more porous films are laminated. Examples of synthetic resin include polytetrafluoroethylene, polypropylene, and polyethylene.

### [Electrolyte Liquid]

At least a part of the active material layer or the separator is impregnated with a liquid non-aqueous electrolyte (an electrolyte liquid). This electrolyte liquid contains electrolyte salt dissolved in a solvent and may contain other materials such as additives.

The same solvents, electrolyte salts, and additives (solvent additives) as those described in the aforementioned "Modification by Electrochemical Method" can be used here. To avoid redundancy, a detailed description is not provided here.

### [Method of Producing Laminate Film Type Secondary Battery]

The laminate film type secondary battery described above can be produced according to the following procedure, for example.

Firstly, the positive electrode is produced with the above positive electrode material. A positive electrode mixture is created by mixing the positive electrode active material with, as necessary, the positive electrode binder, the positive electrode conductive auxiliary agent, and other materials. Then, the mixture is dispersed in an organic solvent to form a slurry of the positive electrode mixture. The mixture slurry is then applied to a positive electrode current collector with a coating apparatus, such as a die coater having a knife roll or a die head, and dried by hot air to obtain the positive electrode active material layer. The positive electrode active material layer is finally subjected to compression molding with, for example, a roll press. In this case, heating may be performed, and the compression may be repeated multiple times.

Secondly, the negative electrode active material layer is formed on the negative electrode current collector to produce the negative electrode through the same procedure as in the above production of the negative electrode 10.

In producing the positive electrode and the negative electrode, the active material layers are formed on both faces of each of the positive and the negative electrode current collectors, respectively. For each electrode, the active materials applied to both sides of the current collector may have different lengths (see FIG. 1).

Then, the electrolyte liquid is prepared. Then, with ultrasonic welding, or the like, the positive electrode lead 32 is attached to the positive electrode current collector, and the negative electrode lead 33 is attached to the negative electrode current collector. The positive and negative electrodes and the separator interposed therebetween are stacked and then wound to produce the wound electrode body 31, and the protective tape is stuck to the outermost circumference of the body 31. Then, the wound electrode body 31 is molded to form a flat shape. The wound electrode body 31 is then sandwiched between the folded film-shaped exterior member 35, and insulating portions of the exterior member are stuck to one another by heat sealing, thereby the wound electrode body 31 is encapsulated in one direction is released. The sealing films 34 are inserted between the exterior member 35 and each of the positive electrode lead 32 and the negative electrode lead 33. The prepared electrolyte liquid described above is introduced from the released side in a prescribed amount to perform the impregnation of the electrolyte liquid under a vacuum. The released side is stuck by vacuum heat sealing after the impregnation. In this manner, the laminate film-type secondary battery 30 can be produced.

In a non-aqueous electrolyte secondary battery such as the laminate film type secondary battery 30 produced above, a utilization ratio of the negative electrode during charge and discharge is preferably between 93% or more and 99% or less. When the utilization ratio of the negative electrode is in the range of 93% or more, a first cycle charge efficiency does not decrease, and battery capacity can be greatly improved. In addition, when the utilization ratio of the negative electrode is in the range of 99% or less, Li precipitation will not occur, and safety can be ensured.

### EXAMPLES

Hereinafter, the present invention will be specifically described with reference to Examples and Comparative Examples. However, the present invention is not limited thereto.

### (Comparative Example 1)

A graphite negative electrode was test-produced. This is because the capacity of a graphite negative electrode used was used as a reference.

A negative electrode of Comparative Example 1 was formed by mixing synthetic graphite : conductive auxiliary agent (acetylene black) : SBR (styrene-butadiene rubber) : CMC (carboxymethylcellulose) in a ratio of 95.7 mass% : 1 mass% : 1.8 mass% : 1.5 mass%.

### (Comparative Example 2)

An electrode was produced by using a powdered Li-doped SiO with a carbon coating (expressed as "Li-SiO-C").

The electrode of Comparative Example 2 was produced by mixing Li-SiO-C : PAA-Na (sodium polyacrylate) : conductive auxiliary agent (acetylene black) in a ratio of 90 mass% : 8 mass% : 2 mass%.

Li-SiO-C was prepared by the following procedure. First, a SiO block was produced by mixing the silicon and the silicon dioxide as raw materials, vaporizing the mixture at 1300°C, depositing thereof on a substrate for deposition, and quenching. This SiO block was pulverized to a median diameter of 7 µm and then Li-doped by using a redox method. After doping, a sample was produced by heat-treating to stabilize Li silicate.

### (Comparative Examples 3 and 5, and Examples 1 and 2)

In Comparative Examples 3 and 5, and Examples 1 and 2, negative electrodes were produced by following the procedure. In these examples, copper foils having a roughened surface with the surface ten-point mean roughness (roughness) Rz of 2.5 µm were used as negative electrode current collectors.

### [Production of Negative Electrode Active Material Layer]

In Comparative Examples 3 and 5, and Examples 1 and 2, gravelly metallic silicon was placed in a carbon crucible, and the silicon was melted and vaporized by using an electron gun under a vacuum. Using a roll-to-roll capable apparatus, the copper foil having the roughened surfaces (to be a negative electrode current collector) was set on a roll, then a silicon film was formed on the copper foil having the roughened surface while running the roll.

In Comparative Example 5, Examples 1 and 2, when forming the film, water vapor was introduced into a silicon vapor stream to attempt forced oxidation.

### (Example 3 and Comparative Example 4)

In Example 3 and Comparative Example 4, metallic silicon and silicon dioxide were placed in a carbon crucible, and then vapor was extracted with heating at 1200°C in an atmosphere with the degree of vacuum of 10⁻² Pa. The vapor was directly supported on a roughened copper foil as in Comparative Example 3.

In Comparative Example 4, in this manner, an electrode having a negative electrode active material layer including the roughened copper foil and silicon oxide provided on this roughened copper foil was obtained.

### (Example 4, Comparative Examples 6 and 7)

In Example 4, Comparative Examples 6 and 7, a film formation was performed by adjusting a film-forming rate and introducing hydrogen or oxygen into the vapor when necessary, such that a value "x" in SiOₓLi_{y} of the negative electrode active material particles corresponds to the values shown in Table 1 below.

In Examples 1 to 4 and Comparative Examples 3 to 7, a multilayer film formation, each having five layers in total, was performed.

### (Example 5 and Comparative Example 8)

In Example 5, a multilayer film having twenty layers was formed by controlling a film-forming rate. In Comparative Example 8, a single-layer film having a single layer was formed.

### [Insertion and Desorption of Lithium]

In Examples 1 to 5, Comparative Examples 3, and 5 to 8, ethylene carbonate (EC) and dimethyl carbonate (DMC) were mixed to prepare a non-aqueous solvent, followed by dissolving an electrolyte salt (lithium hexafluorophosphate: LiPF₆) into this non-aqueous solvent to prepare the electrolyte liquid (non-aqueous electrolyte). In this case, the solvent composition was set to EC : DMC = 30 : 70 in a volume ratio, and the content of the electrolyte salt was set to 1 mol/kg relative to the solvent. The obtained negative electrode active material layer was modified by inserting and desorbing lithium into and from the silicon compound particles using this electrolyte liquid by an electrochemical method. The insertion of lithium was completed when a potential difference between the anode and the cathode reached zero. The desorption of lithium was completed when the potential difference between the anode and the cathode reached 1.2 V. The negative electrode active material layer, obtained after completion of lithium desorption, was cleaned with a dimethyl carbonate non-aqueous solvent to remove the electrolyte salt.

### (Examples 6 to 9 and Comparative Examples 9 to 11)

In Examples 6 to 9 and Comparative Examples 9 to 11, an amount of lithium insertion and a potential difference at which a lithium desorption was completed were adjusted, such that a value "y" in SiOₓLi_{y} of negative electrode active material particles corresponds to values shown in Table 2 below.

### [Formation of Surface Coating]

In Examples 1 to 9, Comparative Examples 3, and 5 to 11, by blowing carbon dioxide on a negative electrode active material layer obtained by modification using an electrochemical method, a coating made of lithium carbonate was formed on a surface of the layer.

### (Examples 10 to 12)

In Example 10, a negative electrode was produced in the same way as in Example 3, except that a formation of a surface coating was not performed. In Example 11, a negative electrode, in which a coating on a surface was absent, was produced in the same way as in Example 3, except that aluminum phosphate was added to an electrolyte liquid during insertion and desorption of lithium, and carbon dioxide was not blown onto a negative electrode active material layer. In Example 12, a negative electrode on which a coating made up from Li₃PO₄, LiF, and Li₂CO₃ was present on a surface thereof was produced in the same way as in Example 3, except that removal of an electrolyte salt after a lithium insertion and desorption was not performed. These results were shown in Table 3.

### (Examples 13 to 20)

In Examples 13 to 20, each negative electrode was produced in the same way as in Example 3, except that a roughness Rz on a copper foil having a roughened surface was varied within 0.5 µm to 7 µm as shown in Table 4 below.

### [SEM Observation of on Surface of Negative Electrode Active Material Layer]

The obtained negative electrode active material layers after forming the surface coating were observed using a scanning electron microscope (SEM). An SEM image of the negative electrode active material layer of the negative electrode of Example 3 is shown in FIG. 3.

As shown in FIG. 3, in the negative electrode active material layer of the negative electrode of Example 3, small particles, i.e., primary particles, aggregated to form secondary particles. Moreover, the secondary particles were separated from each other in an in-plane direction. Visible portions among the secondary particles were parts of a surface of a negative electrode current collector.

When the negative electrode active material layers of the negative electrodes of Examples 1 to 20 were observed using the SEM, the SEM images, as in FIG. 3, were obtained.

### [XPS Spectrum]

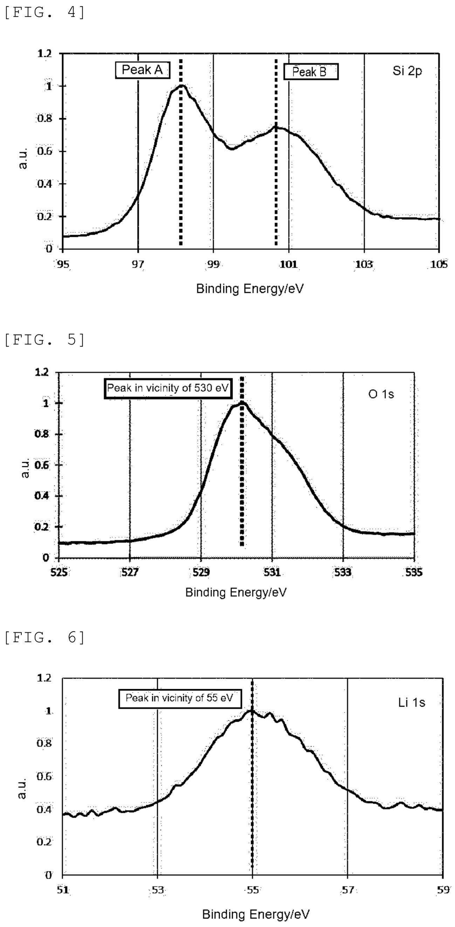

The negative electrode of Example 3 was subjected to an XPS analysis. A part of the XPS spectrum obtained is shown in FIGs. 4 to 6.

As shown in FIG. 4, the XPS spectrum within an interior of each layer in the negative electrode active material layer of the negative electrode of Example 3 exhibited peaks in the vicinities of 98 eV and 100.5 eV, and an intensity of a peak A obtained in the vicinity of 98 eV and an intensity of a peak B in the vicinity of 100.5 eV had a relation in which (the intensity of the peak A ) ≥ (the intensity of the peak B).

In a compound of lithium, silicon, and oxygen, the peak at 100.5 eV can be attributed to a peak corresponding to a Si⁴⁺ silicon-lithium composite oxide, and this composite oxide is considered to be at least one of Li₄SiO₄, Li₂Si₂O₅, Li₂SiO₃, and Li₆Si₂O₇.

In addition, as shown in FIG. 4, since a broad peak shape was observed between 96 to 104 eV, the negative electrode active material of Example 3 is considered to contain the silicon-lithium composite oxide in Si¹⁺ to Si³⁺ state.

As shown in FIG. 5, peaks were present in the vicinity of 530 eV at the interior of each layer in the negative electrode active material layer of the negative electrode of Example 3.

As shown in FIG. 6, peaks were present in the vicinity of 55 eV at the interior of each layer in the negative electrode active material layer of the negative electrode of Example 3. This peak can be attributed to a peak corresponding to the Si⁴⁺ silicon-lithium composite oxide, and the Si⁴⁺ silicon-lithium composite oxide of Example 3 is considered to be present in a greater amount than the silicon compound in the Si¹⁺ to Si³⁺ state.

### [Assembling Coin Battery for Testing]

Subsequently, ethylene carbonate (EC) and dimethyl carbonate (DMC) were mixed to prepare a non-aqueous solvent, followed by dissolving an electrolyte salt (lithium hexafluorophosphate: LiPF₆) into this non-aqueous solvent to prepare the electrolyte liquid (non-aqueous electrolyte). In this case, the solvent composition was set to EC : DMC = 30 : 70 in a volume ratio, and the content of the electrolyte salt was set to 1 mol/kg relative to the solvent. As an additive, fluoroethylene carbonate (FEC) was added at 2.0 mass%.

Next, coin batteries for a first-cycle efficiency test were assembled as follows. First, Li foils having a thickness of 1 mm were punched into a piece having a diameter of 16 mm, and the piece was attached to aluminum clads. Then, the negative electrodes obtained beforehand were punched into a piece having a diameter of 15 mm, the piece was faced with the Li foils attached to the aluminum clads via separators, and after electrolyte liquid injection, 2032 coin batteries were produced.

### [Measurement of First-Cycle Efficiency]

A first-cycle efficiency was measured under the following conditions. First, for the produced coin batteries for the first-cycle efficiency test, the charging (first charge) was performed in CCCV mode at a charge rate corresponding to 0.03 C. The CV was 0 V, and the termination current was set to 0.04 mA. Then, CC discharge (first discharge) was carried out by making the discharge rate at 0.03 C as well, and a discharge termination voltage at 1.2 V.

To investigate initial charge-discharge characteristics, the first-cycle efficiency (hereinafter, may be referred to as an initial efficiency) was calculated. The first-cycle efficiency was calculated from the equation shown by First-cycle efficiency (%) = (First Discharge Capacity / First Charge Capacity) x 100.

### [Production of Lithium Secondary Battery and Battery Evaluation]

From the initial data obtained, a counter-positive electrode was designed to achieve a utilization ratio of 95% for a negative electrode. Based on the following equation, the utilization ratio was calculated from positive and negative electrode capacities obtained with Li of a counter electrode. Utilization Ratio = (Positive Electrode Capacity - Negative Electrode Loss) / (Negative Electrode Capacity - Negative Electrode Loss) x 100

Each lithium secondary battery of Examples and Comparative Examples was produced based on this design. Each lithium secondary battery of Examples and Comparative Examples was subjected to battery evaluation.

The cycle characteristics were investigated as follows. First, for battery stabilization, two cycles of charge and discharge were performed at 0.2 C under an atmosphere of 25°C, and the discharge capacity at the second cycle was measured. The battery cycle characteristics started from the discharge capacity at the third cycle were calculated, and the battery test was stopped at 100 cycles. The charge and discharge were performed at a charging rate of 0.7 C and a discharging rate of 0.5 C. The charge voltage was 4.3 V, the discharge termination voltage was 2.5 V, and the charge termination rate was 0.07 C.

The discharge capacity of the second cycle measured in the cycle characteristics test was taken as the capacity achieved by each negative electrode.

**[Table 1]**

| | Compound of Lithium, Silicon, Oxygen | "x" in SiOxLiy | "y" in SiOxLiy | Layer structure | (Intensity of Peak A) ≥ (Intensity of Peak B) | Capacity Retention at 100 Cycles (%) | **First-**Cycle Efficiency (%) | Capacity Increase Rate per Volume (%) |
|---|---|---|---|---|---|---|---|---|
| Comparative Example 1 | Graphite | - | - | - | Satisfied | 95 | 94.0% | 0. 0 |
| Comparative Example 2 | Present (Li-SiO-C powder) | 1 | 0.7 | - | Satisfied | 92 | 90.1% | 28.0 |
| Comparative Example 3 | Si, Li | 0.1 | - | 5 | Satisfied | 41 | 91.0% | 41. 0 |
| Comparative Example 4 | Si, O | 1 | 0 | 5 | Satisfied | 89 | 62.6% | 18. 0 |
| Comparative Example 5 | Present | 0.7 | 1.6 | 5 | Satisfied | 84 | 92.3% | 42.0 |
| Example 1 | Present | 0.8 | 1.6 | 5 | Satisfied | 88 | 93.0% | 44.3 |
| Example 2 | Present | 0.9 | 1.6 | 5 | Satisfied | 87 | 95.3% | 44.3 |
| Example 3 | Present | 1 | 1.6 | 5 | Satisfied | 96 | 97.5% | 44.3 |
| Example 4 | Present | 1.1 | 1.6 | 5 | Satisfied | 93 | 94.2% | 44.3 |
| Comparative Example 6 | Present | 1.3 | 1.6 | 5 | Satisfied | 85 | 89.6% | 44.3 |
| Comparative Example 7 | Present | 1.4 | 1.6 | 5 | Satisfied | 83 | 89.0% | 44.3 |
| Comparative Example 8 | Present | 1 | 1.6 | 1 | Satisfied | 83 | 96.5% | 46.0 |

**[Table 2]**

| | Compound of Lithium, Silicon, Oxygen | "x" in SiOxLiy | "y" in SiOxLiy | Layer structure | Intensity Ratio of Peak A to Peak B (A/B) | Capacity Retention at 100 Cycles (%) | First-Cycle Efficiency (%) | Capacity Increase Rate per Volume (%) |
|---|---|---|---|---|---|---|---|---|
| Example 3 | Present | 1 | 1.6 | 5 | 1.4 | 96 | 97.5% | 44.3 |
| Example 5 | Present | 1 | 1.6 | 20 | 1.4 | 92 | 95.8% | 41.0 |
| Comparative Example 9 | Present | 1 | 0.4 | 5 | 0.2 | 86 | 68.5% | 42.0 |
| Comparative Example 10 | Present | 1 | 0.7 | 5 | 0.8 | 91 | 74.8% | 42.3 |
| Comparative Example 11 | Present | 1 | 1 | 5 | 1.0 | 93 | 81.9% | 42.8 |
| Example 6 | Present | 1 | 1.3 | 5 | 1.2 | 93 | 89.0% | 43.1 |
| Example 7 | Present | 1 | 3.3 | 5 | 1.6 | 94 | 92.5% | 43.3 |
| Comparative Example 12 | Present | 1 | 3.5 | 5 | 1.7 | 96 | 82.3% | 43.0 |
| Example 8 | Present | 1 | 1.5 | 5 | 1.5 | 93 | 95.6% | 43.8 |
| Example 9 | Present | 1 | 1.4 | 5 | 1.5 | 91 | 95.6% | 44.0 |

**[Table 3]**

| | Coating | (Intensity of Peak A) ≥ (Intensity of Peak B) | Capacity Retention at 100 Cycles (%) | First-Cycle Efficiency (%) | Capacity Increase Rate per Volume (%) |
|---|---|---|---|---|---|
| Example 10 | Uncoated | Satisfied | 89 | 97.5% | 44.3 |
| Example 11 | ALPO4 | Satisfied | 92 | 97.5% | 44.3 |
| Example 12 | Li3PO4, LiF, Li2CO3 | Satisfied | 94 | 97.5% | 44.3 |

**[Table 4]**

| | Cu roughness | (Intensity of Peak A) ≥ (Intensity of Peak B) | Capacity Retention at 100 Cycles (%) | First-Cycle Efficiency (%) | Capacity Increase Rate per Volume (%) |
|---|---|---|---|---|---|
| Example 13 | 0.5 | Satisfied | 92 | 92.5% | 44.3 |
| Example 14 | 1 | Satisfied | 94 | 95.1% | 44.3 |
| Example 15 | 1.5 | Satisfied | 90 | 96.2% | 44.3 |
| Example 16 | 2 | Satisfied | 89 | 96.4% | 44.3 |
| Example 17 | 3 | Satisfied | 87 | 95.4% | 44.3 |
| Example 18 | 4 | Satisfied | 85 | 95.8% | 44.3 |
| Example 19 | 5 | Satisfied | 85 | 96.1% | 44.3 |
| Example 20 | 7 | Satisfied | 84 | 96.8% | 44.3 |

### [Results]

In Tables 1 to 4 shown above, increase rates of a discharge capacity (Wh/L) per volume relative to Comparative Example 1 are shown as capacity increase rates.

As is clear from Tables 1 to 4, it was found that all of the negative electrodes of Examples 1 to 20 obtained capacity increase rates exceeding 40% and significantly increased the capacities more than a graphite negative electrode of Comparative Example 1, while maintaining the battery characteristics(cycle characteristics and first-cycle efficiency).

On the other hand, the negative electrode of Comparative Example 2, produced using a powdered Li-SiO, had a lower capacity than that of the negative electrodes of Examples 1 to 20. This is considered that the negative electrode of Comparative Example 2, in which powder instead of deposition was used, had a binder, which was not involved in charge and discharge, and also a number of excess vacant spaces.

Moreover, the negative electrode of Comparative Example 3 had significantly inferior cycle characteristics compared with those in Examples 1 to 20.

Comparative Example 4 showed a lower capacity increase rate per volume than Examples 1 to 20. This may be caused by the fact that Li insertion was not performed in silicon oxide.

The silicon oxide is produced from silicon and silicon dioxide, causing difficulty in increasing and decreasing an amount of oxygen. In fact, the silicon oxide in which "x" in SiOₓLi_{y} was 0.7 (Comparative Example 5) was unable to control the valence, resulting in a significant amount of silicon component remaining.

To realize even lower oxygen content, it is required not only to introduce hydrogen into vapor to actively reduce thereof, but also to significantly reduce the film-formation rate.

The negative electrode of Comparative Example 5 showed cycle characteristics lower than the negative electrodes of Examples 1 to 3, as a result of setting "x" in SiOₓLi_{y} to 0.7. This is considered to be caused by an excessive increase of an area where zero-valent Si was reacted with the electrolyte liquid, due to "x" in SiOₓLi_{y} being set to 0.7 in the negative electrode of Comparative Example 5.

On the other hand, when the amount of oxygen was to be increased, then the film-formation rate was also reduced, and oxygen was directly blown into the vapor stream to form the film, but a preparation of the silicon oxide film became difficult as the amount of oxygen was increased.

The negative electrodes of Comparative Examples 6 and 7 showed the first-cycle efficiency lower than the negative electrodes of Examples 1 to 3, as a result of setting "x" in SiOₓLi_{y} to 1.3 and 1.4, respectively. This is considered to be caused by an excessive increase of a loading substance, due to "x" in SiOₓLi_{y} being set to 1.3 and 1.4 in negative electrodes of Comparative Examples 6 and 7. Since there is a tendency for the first-cycle efficiency to decrease as "x" increases, it is preferable to maintain "x" at 1.2 or less.

In the negative electrode of Comparative Example 8, when compared with Example 3, the cycle characteristics were significantly degraded. This is considered to be caused by an inability to mitigate the expansion and contraction of the negative electrode due to the formation of a single layer by forming the silicon oxide film without running the roughened copper foil.

The negative electrode having a multilayer structure, such as those in Examples 3 and 5, can mitigate the expansion and contraction of the negative electrode and improve the cycle characteristics.

As a result of setting "y" of SiOₓLi_{y} to 0.4 to 1.0, the negative electrodes of Comparative Examples 9 to 11 had lower first-cycle efficiencies than those in Examples 1 to 4. This is considered to be caused by the insufficient amount of inserted Li, thus unable to suppress the irreversible component in the negative electrode. Since there is a tendency for the first-cycle efficiency to be lowered as "y" decreases, it is preferable to maintain "y" at 0.5 or more, in particular, so as not to reduce "y" below 0.4.

The negative electrodes of Examples 3, 6, and 7 successfully suppressed the irreversible component in the negative electrodes and improved both first-cycle efficiency and cycle characteristics compared to those in Comparative Examples 9 to 11, as a result of setting "y" in SiOₓLi_{y} to 1.3 to 3.3.

On the other hand, the negative electrode of Comparative Example 12 had a lowered first-cycle efficiency as a result of increasing "y" in SiOₓLi_{y} to 3.5. This is considered that the negative electrode active material was in a highly reactive state, and a portion of the material became deactivated during battery assembly, resulting in a significant decrease in the first-cycle efficiency. It is preferable to maintain "y" at 3.4 or less, in particular so as not to make 3.5 or more.

Examples 3, 10 to 12 were examples in which effects of the coating on the outermost surface of the negative electrode active material layer on the battery characteristics were studied.

The negative electrodes having the coatings of Examples 3, 11, and 12 successfully improved the cycle characteristics while maintaining the first-cycle efficiencies, compared to those of Example 10 without the coating.

It is considered that the presence of the coatings on the outermost surfaces of the negative electrode active material layers, as shown in Examples 3, 11, and 12, successfully suppressed reactions with moisture and oxygen, inhibited degradation of materials, suppressed decomposition of the electrolyte liquid, and maintained excellent battery characteristics while also allowing easy introduction of Li. Consequently, it is preferable to have such a coating.

Examples 13 to 20 shown in Table 4 are examples that have a purpose of searching for the most suitable roughness Rz by adjusting the roughness Rz on the surfaces of the roughened copper foils as the negative electrode current collectors.

From the results of Example 3, and Examples 13 to 20, it was indicated that the negative electrodes of Example 3 and Examples 15 to 19, in which the roughness Rz on the surfaces of the roughened copper foils were 1.5 µm or more and 5.0 µm or less, were able to show higher first cycle characteristics than the negative electrodes of Examples 13 and 14, in which roughness Rz was less than 1.5 µm, and show superior cycle characteristics than that of Example 20, in which roughness Rz was more than 5.0 µm. This is considered to be a result of the negative electrodes of Example 3 and Example 15 to 19, which had the roughness Rz on the surfaces of the roughened copper foils of 1.5 µm or more and 5.0 µm or less, thus the negative electrode active material layers were sufficiently supported by the roughened portions of the surface of the current collectors and suppressed exfoliation of the active material during charge and discharge more sufficiently. Accordingly, the roughness Rz on the surface is preferably 1.5 µm or more and 5.0 µm or less.

The present description includes the following embodiments.
[1]: A negative electrode comprising:
   a negative electrode current collector having a roughened surface; and
   a negative electrode active material provided on the negative electrode current collector, wherein
   the negative electrode active material contains negative electrode active material particles including a compound of lithium, silicon, and oxygen,
   the negative electrode active material particles are represented by SiOₓLi_{y},
   a value "x" is 0.8 or more and 1.2 or less, and a value "y" is 0.5 or more and 3.4 or less,
   the negative electrode active material has a multilayer structure composed of two or more layers, and
   in Si 2p binding energy obtained by an X-ray photoelectron spectroscopy analysis of an interior of each layer in the negative electrode active material having the multilayer structure, an intensity of a peak A obtained in a vicinity of 98 eV and an intensity of a peak B in a vicinity of 100.5 eV have a relation in which (the intensity of the peak A ) ≥ (the intensity of the peak B).
[2]: The negative electrode according to the above [1], wherein
   an intensity ratio (the intensity of the peak A) / (the intensity of the peak B) of the peak A to the peak B obtained by the X-ray photoelectron spectroscopy analysis of the interior of each layer in the negative electrode active material having the multilayer structure is 1.1 or more and 1.6 or less.
[3]: The negative electrode according to the above [1] or [2], wherein
   in Li 1s binding energy obtained by the X-ray photoelectron spectroscopy analysis of the interior of each layer in the negative electrode active material having the multilayer structure, a peak is obtained in a vicinity of the Li 1s binding energy of 55 eV.
[4]: The negative electrode according to any of the above [1] to [3], wherein
   in O 1s binding energy obtained by the X-ray photoelectron spectroscopy analysis of the interior of each layer in the negative electrode active material having the multilayer structure, a peak is obtained in a vicinity of the O 1s binding energy of 530 eV.
[5]: The negative electrode according to any of the above [1] to [4], wherein
   the negative electrode active material has a coating on an outermost surface made of at least one of lithium carbonate, lithium phosphate, lithium fluoride, aluminum carbonate, aluminum phosphate, and aluminum fluoride.
[6]: The negative electrode according to any of the above [1] to [5], wherein
   the negative electrode active material has at least one of Li₄SiO₄, Li₂Si₂O₅, Li₂SiO₃, and Li₆Si₂O₇.
[7]: The negative electrode according to any of the above [1] to [6], wherein
   the negative electrode active material has Si¹⁺ to Si³⁺ silicon and lithium composite oxide.
[8]: The negative electrode according to any of the above [1] to [7], wherein
   the negative electrode active material has more Si⁴⁺ silicon and the lithium composite oxide than Si¹⁺ to Si³⁺ silicon compounds.
[9]: The negative electrode according to any of the above [1] to [8], wherein
   the negative electrode current collector has a ten-point mean roughness Rz on the surface between 1.5 µm or more and 5.0 µm or less.
[10]: The negative electrode according to any of the above [1] to [9], wherein
   when the negative electrode active material particles are defined as primary particles, the negative electrode active material layer forms secondary particles, which are aggregates of the primary particles, and the secondary particles have a form separated from each other in an in-plane direction.
[11]: A method for producing the negative electrode according to any of the above [1] to [10], the method comprising the steps of:
   winding the negative electrode current collector on a can roll having a curvature;
   growing a film containing silicon and/or silicon monoxide and having a multilayer structure composed of two or more layers on the negative electrode current collector by vapor phase growth, while the negative electrode current collector is running on the can roll;
   forming layers having a multilayer structure, in which an upper portion of each layer contains silicon dioxide, by blowing a gas containing oxygen onto the film containing silicon and/or silicon monoxide; and
   forming the negative electrode active material layer by inserting and releasing lithium into and from the layers having the multilayer structure.
[12]: The method for producing the negative electrode according to the above [11], wherein
   in the step of forming the layers having the multilayer structure, the layers having the multilayer structure are formed such that each layer contains the silicon oxide that includes the silicon dioxide, and
   the method for producing the negative electrode comprises the steps of:
      growing the negative electrode active material layer that contains the silicon oxide on the negative electrode current collector by vapor phase growth; and
      immersing the negative electrode active material layer in a solution containing lithium, thereby modifying the silicon oxide by an electrochemical method to a compound having the lithium, the silicon, and the oxygen, and forming the coating.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A negative electrode comprising:
a negative electrode current collector having a roughened surface; and
a negative electrode active material provided on the negative electrode current collector, wherein
the negative electrode active material contains negative electrode active material particles including a compound of lithium, silicon, and oxygen,
the negative electrode active material particles are represented by SiOₓLi_{y},
a value "x" is 0.8 or more and 1.2 or less, and a value "y" is 0.5 or more and 3.4 or less,
the negative electrode active material has a multilayer structure composed of two or more layers, and
in Si 2p binding energy obtained by an X-ray photoelectron spectroscopy analysis of an interior of each layer in the negative electrode active material having the multilayer structure, an intensity of a peak A obtained in a vicinity of 98 eV and an intensity of a peak B in a vicinity of 100.5 eV have a relation in which (the intensity of the peak A ) ≥ (the intensity of the peak B).

2. The negative electrode according to claim 1, wherein
an intensity ratio (the intensity of the peak A) / (the intensity of the peak B) of the peak A to the peak B obtained by the X-ray photoelectron spectroscopy analysis of the interior of each layer in the negative electrode active material having the multilayer structure is 1.1 or more and 1.6 or less.

3. The negative electrode according to claim 1, wherein
in Li 1s binding energy obtained by the X-ray photoelectron spectroscopy analysis of the interior of each layer in the negative electrode active material having the multilayer structure, a peak is obtained in a vicinity of the Li 1s binding energy of 55 eV.

4. The negative electrode according to claim 1, wherein
in O 1s binding energy obtained by the X-ray photoelectron spectroscopy analysis of the interior of each layer in the negative electrode active material having the multilayer structure, a peak is obtained in a vicinity of the O 1s binding energy of 530 eV.

5. The negative electrode according to claim 1, wherein
the negative electrode active material has a coating on an outermost surface made of at least one of lithium carbonate, lithium phosphate, lithium fluoride, aluminum carbonate, aluminum phosphate, and aluminum fluoride.

6. The negative electrode according to claim 1, wherein
the negative electrode active material has at least one of Li₄SiO₄, Li₂Si₂O₅, Li₂SiO₃, and Li₆Si₂O₇-

7. The negative electrode according to claim 1, wherein
the negative electrode active material has Si¹⁺ to Si³⁺ silicon and lithium composite oxide.

8. The negative electrode according to claim 1, wherein
the negative electrode active material has more Si⁴⁺ silicon and the lithium composite oxide than Si¹⁺ to Si³⁺ silicon compounds.

9. The negative electrode according to claim 1, wherein
the negative electrode current collector has a ten-point mean roughness Rz on the surface between 1.5 µm or more and 5.0 µm or less.

10. The negative electrode according to claim 1, wherein
when the negative electrode active material particles are defined as primary particles, the negative electrode active material layer forms secondary particles, which are aggregates of the primary particles, and the secondary particles have a form separated from each other in an in-plane direction.

11. A method for producing the negative electrode according to any one of claims 1 to 10, the method comprising the steps of:
winding the negative electrode current collector on a can roll having a curvature;
growing a film containing silicon and/or silicon monoxide and having a multilayer structure composed of two or more layers on the negative electrode current collector by vapor phase growth, while the negative electrode current collector is running on the can roll;
forming layers having a multilayer structure, in which an upper portion of each layer contains silicon dioxide, by blowing a gas containing oxygen onto the film containing silicon and/or silicon monoxide; and
forming the negative electrode active material layer by inserting and releasing lithium into and from the layers having the multilayer structure.

12. The method for producing the negative electrode according to claim 11, wherein
in the step of forming the layers having the multilayer structure, the layers having the multilayer structure are formed such that each layer contains the silicon oxide that includes the silicon dioxide, and
the method for producing the negative electrode comprises the steps of:
growing the negative electrode active material layer that contains the silicon oxide on the negative electrode current collector by vapor phase growth; and
immersing the negative electrode active material layer in a solution containing lithium, thereby modifying the silicon oxide by an electrochemical method to a compound having the lithium, the silicon, and the oxygen, and forming the coating.
